Europäisches Patentamt

European Patent Office

Office européen des brevets

(11) Publication number: **0 094 106**
**B1**

(12) **EUROPEAN PATENT SPECIFICATION**

(45) Date of publication of patent specification: **15.10.86**

(51) Int. Cl.⁴: **F 03 D 7/02**

(21) Application number: **83200410.5**

(22) Date of filing: **23.03.83**

(54) **Blade setting mechanism for the rotor blades of a windmill.**

(30) Priority: **26.03.82 NL 8201281**
**15.12.82 NL 8204845**

(43) Date of publication of application:
**16.11.83 Bulletin 83/46**

(45) Publication of the grant of the patent:
**15.10.86 Bulletin 86/42**

(84) Designated Contracting States:
**BE DE FR GB IT NL SE**

(56) References cited:
**WO-A-83/00195**
**BE-A- 445 358**
**DE-C- 695 463**
**FR-A-1 109 809**
**FR-A-2 291 378**
**FR-A-2 313 576**
**US-A-2 370 135**

(73) Proprietor: **FDO Technische Adviseurs B.V.**
**Oostenburgervoorstraat 70**
**NL-1018 MR Amsterdam (NL)**

(72) Inventor: **Carstens, Christiaan**
**No. 73 Henry Dunantstraat**
**NL-1443 GB Purmerend (NL)**

(74) Representative: **Konings, Lucien Marie Cornelis**
**Joseph et al**
**OCTROOIBUREAU ARNOLD & SIEDSMA**
**Sweelinckplein 1**
**NL-2517 GK Den Haag (NL)**

EP 0 094 106 B1

Courier Press, Leamington Spa, England.

# 0 094 106

**Description**

The invention relates to a blade setting mechanism for setting the rotor blades of a windmill having a rotor shaft horizontally journalled in a rotor nacelle part said mechanism comprising setting means acted upon by a rotation motor supplying setting energy and arranged in the hollow rotor hub and the rotor shaft and coupled with the rotor blades rotatably arranged in the rotor hub with means capable of producing a blade setting torque. This torque may be achieved by various transmission means known *per se*.

Rotor blades have to be adjustable between the vane position and the working positions. In the vane position the nose of the rotor blades of a mill rotor standing in the wind is directed against the direction of the wind in a manner such that, when the mill rotor is standing still, the average angle of incidence on the rotor blade is equal to zero. In this situation the wind does not exert an aerodynamic torque on the mill rotor.

In the working positions the blades are turned in the rotor hub in a manner such that the relative air speed vector engages the rotor blade at such an angle of incidence that a driving aerodynamic torque is exerted on the rotating mill rotor.

When the windmill is operating, the rotor blades should, in all circumstances, be adjustable to the vane position in order to thus permit of reducing the speed of rotation of the mill rotor to zero. This should also be possible when the driving motor supplying the setting energy would become inoperative. In order to provide this possibility, generally parts of the setting system are duplicated or, in the case of an electro-hydraulic system, an emergency pressure reservoir is usually employed for the hydraulic working fluid. These solutions are complicated and expensive and are otherwise always based on the assumption that internally setting energy is supplied so that the reliability of operation is adversely affected.

The invention has for its object to obviate these inconveniences and to provide a simple, reliable blade setting mechanism which is capable of automatically adjusting the rotor blades towards the vane position without using an internal source of energy. According to the state of the Art this is achieved in that the setting means are displaced by a spindle shaft coaxially arranged in the hollow rotor shaft and being rotatable with respect to the rotor shaft and being connected with a shaft of the stationary rotation motor, which spindle shaft can be firmly connected with the rotor shaft by means of an electro-magnetic clutch.

There is preferably provided an electro-magnetic brake which when no longer energized, delays the speed of rotation of the spindle shaft, since the direction of the pitch angle of the screwthread of the spindle shaft is such that, when the spindle shaft is rotating in the same direction as the rotor shaft with lower speed than the rotor shaft, blade adjustment towards the vane position takes place. A blade adjustment towards the working position necessarily occurs when the spindle shaft is rotating with higher speed than the rotor shaft. Of the electro-magnetic clutch and brake the electromagnetic part is preferably designed so that by switching off the electric energizing current the clutch becomes inoperative so that the connection between the spindle shaft and the rotor shaft is obviated and the brake will engage the output shaft of the then non-energized electric motor of the setting mechanism. During the rotation of the mill rotor the rotor shaft will rotate with higher speed than the spindle shaft so that the rotor blades are set to the vane position and the mill rotor is brought to a standstill by aerodynamic braking.

In this way, in a simple, reliable manner, without the use of an internal source of energy, the adjustment of the rotor blades of an operative windmill towards the vane position and hence stopping of the mill rotor are ensured.

The table I illustrates the electric circuit combinations for the operation of the blade setting mechanism in accordance with such a device in various operational situations of the windmill.

The above features of the present invention are already described in the non prepublished publication WO—A—83/00195.

2

TABLE II

| Electro-mechanic parts of the blade setting mechanism | Operative situation windmill | | | | | |
|---|---|---|---|---|---|---|
| | Starting up | Control | No control | Stopping 1st phase | 2nd phase | Emergency stop |
| a) Multi-disc clutch electric energization *on*→spindle shaft fixed to rotor shaft | | | X | | | |
| *off*→spindle shaft released from rotor shaft | X | X | | X | X | X |
| b) Brake electr. energization *on*→brake inoperative | X | X | X | X | | |
| *off*→brake operating | | | | | X | X |
| c. Electric motor electr. energization *on*→low speed | X⤸ | X⁄ | | X | | |
| *on*→high speed | X⤸ | X⁄ | | | | |
| *off* | | | X | | X | X |

For setting the rotor blade angle during the operation of the windmill, however, it is always necessary to use the rotation motor, which has to be switched on and off frequently and transiently. As a matter of course this may adversely affect the lifetime of said motor. Furthermore, the speed of blade setting depends, of course, both on the rotary speed of the motor and on the rotational speed of the rotor, which are not in fixed relationship to one another, unless a motor of controllable speed and a control-device are employed, which implies an additional complication. The same applies to a rotation motor having two speeds. The present invention has essentially the additional object over WO—A—83/00195 to provide such setting mechanism that during the operation of the windmill the blades can not only be set towards the vane position without using an internal source of energy, but also be set towards a working position varying with the wind conditions.

When the blade setting mechanism comprises, in addition, an auxiliary shaft driven by the rotor shaft as well as driving means for causing the auxiliary shaft to drive the spindle shaft optionally with a lower of a higher speed than that of the rotor shaft, the rotor blade angle can be set during the operation of the windmill without using the rotation motor. Preferably the auxiliary shaft is driven with a slightly lower speed than the rotor shaft by means of a gear wheel system. The auxiliary shaft is preferably provided with further two gear wheels, which co-operate with gear wheels fastened to two couplings co-operating with the spindle shaft. The couplings are preferably designed in the form of electro-magnetically energized clutches which establish the coupling between the spindle shaft and the auxiliary shaft by supplying an energizing current. Consequently it is possible in this way to change the blade setting angle, whilst the windmill is operating with rotating rotor, without using the rotation motor and simply by actuating one of the above-mentioned clutches. Therefore, the rotation motor is only necessary for putting the windmill into operation when the rotor blades are still in the vane position by turning them into a first working position and in the event a windmill is put out of operation and the rotor blades do not fully occupy the vane position at a standstill, by turning them into said position.

When a differential mechanism is used, with which the spindle shaft and the auxiliary shaft are connected, an indication of the rotor blade setting angle can be directly obtained with the need for including sensors in the rotatable part of the rotor.

The above-mentioned and further features of the invention will be described by way of non-limiting example for an embodiment with reference to a schematic drawing.

The drawings shows in:

Figure 1 a side elevation of a windmill in which the invention, may be incorporated;

Figure 2 an enlarged, fragmentary, exploded side elevation of a detail II of Figure 1,

Figure 3 an enlarged side elevation and partly a sectional view of detail III of Figure 1, illustrating a blade setting mechanism according to the state of the Art; this figure and the subsequent Figures 4—8 are necessary for understanding the invention but do not illustrate embodiments of that invention.

Figure 4 a sectional view taken on the line IV—IV in Figure 3,

Figure 5 an elevational view in the direction of the arrows V in Figure 3,

Figure 6 a sectional view taken on the line VI—VI in Figure 3,

3

Figure 7 an enlarged side elevation and partly a sectional view of detail VII of Figure 3;

Figure 8 a side elevation corresponding to Figure 3 of a variant of the mechanism shown in Figure 3; and

Figure 9 schematically, on an enlarged scale, a side elevation and partly a sectional view of a blade setting mechanism according to the invention.

A windmill park may comprise a series of identical windmills 1 embodying the invention, which windmills 1 may be of the horizontal shaft type and a hoisting implement adapted to travel along said windmills.

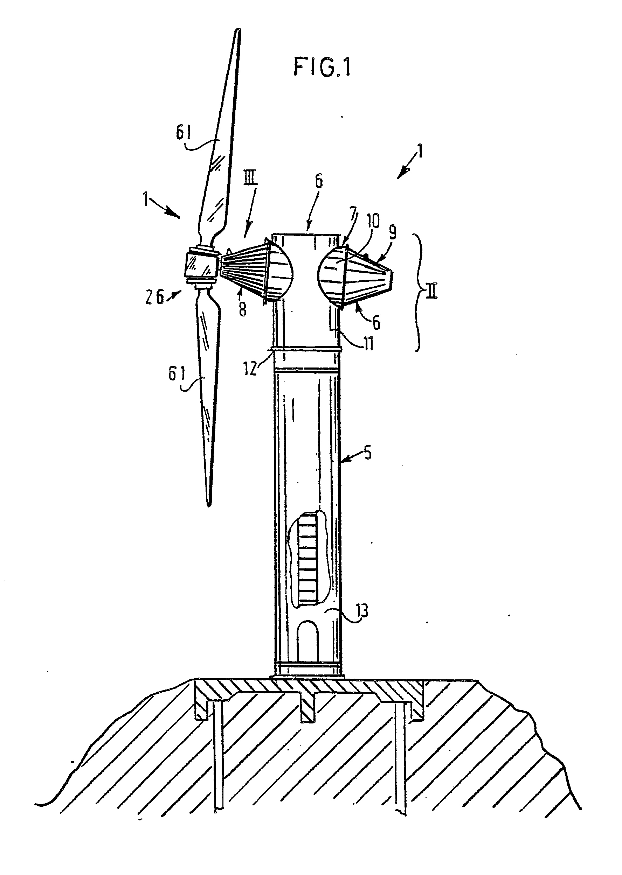

Each windmill 1 (Figure 1) comprises a mill shaft 5 and a nacelle 6 carried by the mill shaft 5. The nacelle 6 comprises a stationary nacelle part 7 and two nacelle parts 8 and 9 mounted on the stationary cabin part 7.

The stationary nacelle part 7 has the shape of a horizontal cylinder 10, which is connected with and welded to a cylindrical topmost mill shaft part 11. By means of said mill shaft part 11 and a rotary crown 12 the stationary nacelle part 7 is rotatably arranged on a stationary mill shaft 13 of the mill shaft 5.

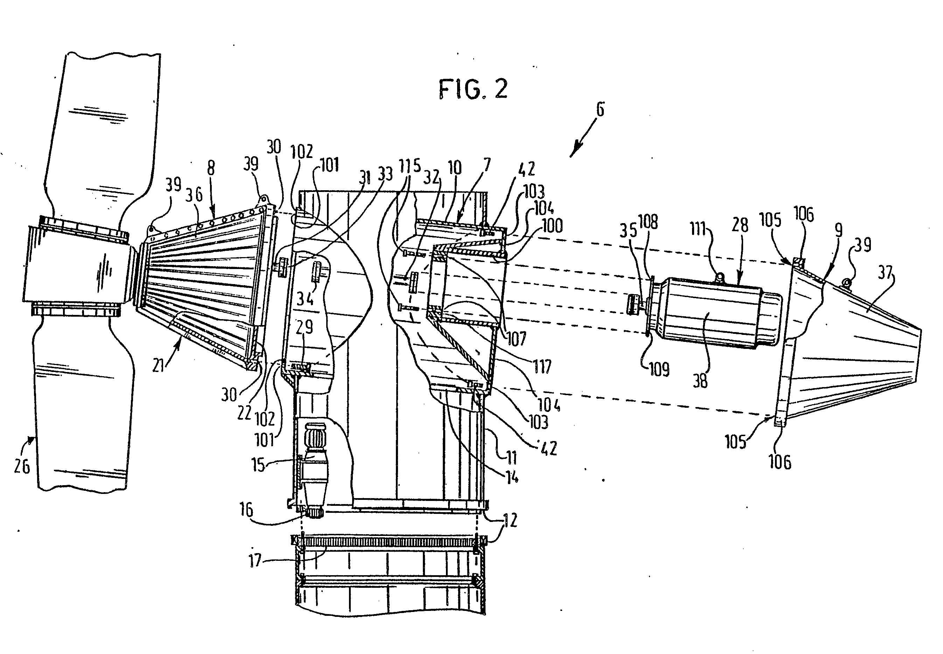

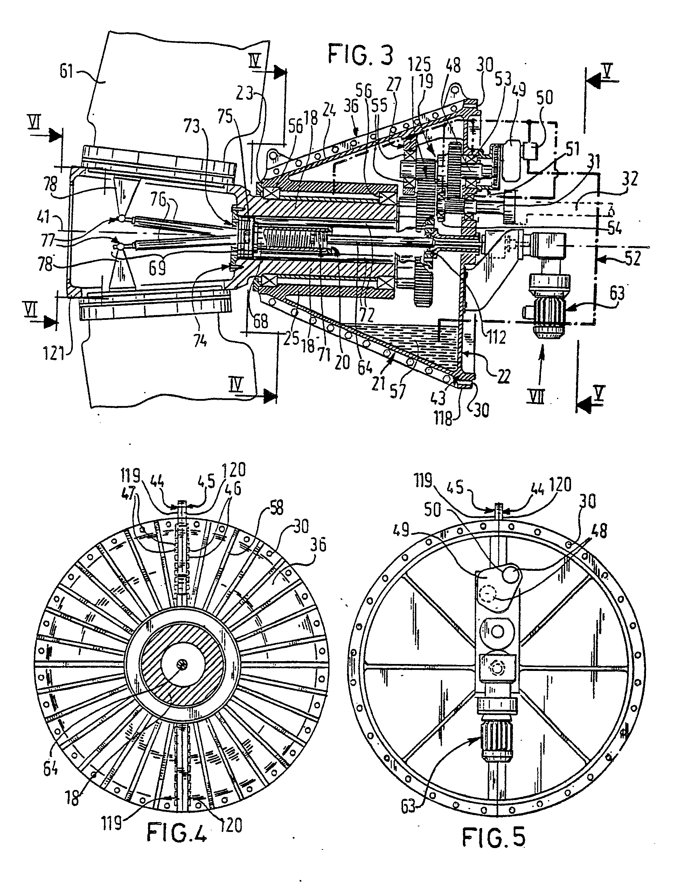

For turning the cabin 6 at least one electric motor 15 is provided, which drives via a pinion 16 and a toothed crown 17 the nacelle 7 for wheeling the same (Figure 2). On the underside the stationary nacelle part 7 has a manhole 14 so that the nacelle 6 is accessible from the interior of the mill shaft 5. The nacelle part 8 (Figure 3), hereinafter termed rotor nacelle part 8, comprises a number of mechanisms to wit: a rotor shaft 18, a gear wheel drive 19 and a blade setting mechanism 20. This rotor nacelle part 8 comprises a cabinet 21 having a wall 22 fastened to the stationary nacelle part 7, a free end 23 directed towards a mill rotor 26 and an intermediate, diverging jacket 24, a rotor bearing housing 25, in which a mill rotor 26 is journalled by means of its rotor shaft 18 and a gear wheel drive housing 27, in which the gear wheel drive 19 is journalled, which is driven by the rotor shaft 18.

The nacelle part 9, hereinafter termed generator screening hood 9, has the shape of a truncated cone and surrounds a mechanism comprising a generator 28 journalled on the stationary nacelle part 7.

An intermediate shaft 32 arranged in the stationary nacelle part 7 connects by means of disengageable couplings 33 and 34 and output shaft 31 of the gear wheel drive 19 with a shaft of the generator 28.

The rotor nacelle part 8 with the mechanisms 18, 19 and 20 arranged therein and the stationary nacelle part 7 are detachably interconnected with the aid of fastening means formed by bolts 29. The generator screening hood 9 surrounding the generator 28 and the generator 28 journalled on the stationary nacelle part 7 by a sliding fit in a carrying frame 100 on the one hand and the stationary nacelle part 7 on the other hand are detachably interconnected by fastening means formed by bolts 42 for the generator screening hood 9 and by bolts 115 for the generator 28.

On an outer face 36, 37 of the rotor nacelle part 8 and the generator screening hood 9 and on a generator housing 38 of the generator 28 are provided tackle fastening means formed by tackling eyelets 39 and 111. A hoisting cord of the hoisting implement can be fastened to the tackling eyelets 39 or 111 in order to remove the rotor nacelle part 8, the generator screening hood 9 or the generator 28 from the stationary nacelle part 7.

The bolts 29 fastening the rotor nacelle part 8 to the stationary nacelle part 7 can be manipulated from within the nacelle 6 and are screwed through holes 101 in a centering flange 102 of the stationary nacelle part 7 into tapped holes 30 of the wall 22 of the rotor nacelle part 8.

The rotor nacelle part 8 and the mechanisms 18, 19, 20 surrounded by the rotor nacelle part 8 can be removed together by a single manipulation with the aid of the hoisting implement from the stationary nacelle part 7, after in order of succession the hoisting cord of the hoisting implement is fastened to the eyelets 39 of the rotor nacelle part 8, the coupling 33 is loosened from within the nacelle 6 and the bolts 29 fastening the rotor nacelle part 8 to the stationary nacelle part 7 are unscrewed.

The bolts 42 fastening the generator screening hood 9 to the stationary nacelle part 7 can be manipulated from within the nacelle 6 and are screwed through holes 103 in a flange 104 of the stationary nacelle part 7 into tapped holes 105 of a flange 106 of the generator screening hood 9.

The generator screening hood 9 can be removed from the stationary nacelle part 7, after in order of succession the hoisting cord of the hoisting implement is fastened to the eyelet 39 of the generator screening hood 9 and the bolts 42 fastening the generator screening hood 9 to the stationary nacelle part 6 are unscrewed from within the nacelle 6.

The bolts 115 fastening the generator 28 to the stationary nacelle part 7 are screwed through holes 107 in a centering flange structure 117 of the carrying frame 100 of the stationary nacelle part 7 into tapped holes 108 of a flange 109 of the generator 28.

When the generator screening hood 9 is removed from the stationary nacelle part 7, the generator 28 can be removed with the aid of the hoisting implement from the stationary nacelle part 7 after, in order of succession, the hoisting cord of the hoisting implement is fastened to the eyelet 111 of the generator housing 38, the coupling 34 is loosened from within the nacelle 6, the bolts 115 are unscrewed from within the nacelle 6 and the generator 28 is slipped out of the carrying frame 100 in which it is accommodated with sliding fit.

The rotor nacelle part 8 and the mechanisms 18, 19, 20 surrounded by the rotor nacelle part 8 constitute an integral unit which is detachably connected on the one hand with the stationary nacelle part 7 on the other hand with one another. Furthermore the generator hood 9 and the mechanism 28 surrounded by the generator hood 9 are detachably connected each with the stationary nacelle part 7 and with one another.

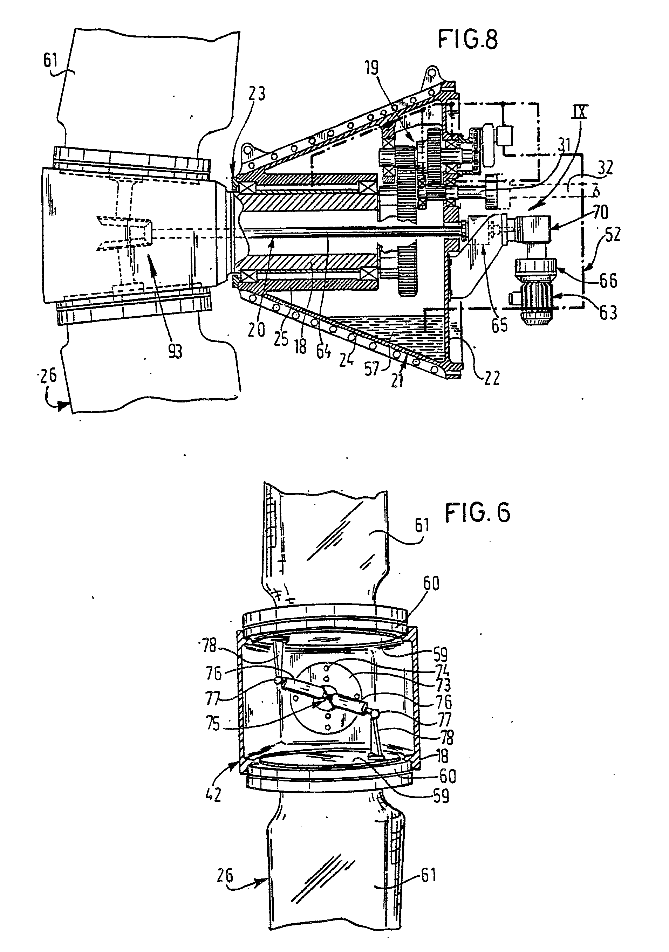

The rotor nacelle part 8 of the nacelle 6 of the windmill 1 comprises the cabinet 21, the rotor bearing housing 25 and the gear wheel drive housing 27. The rotor bearing housing 25 and the gear wheel drive housing 27 are accommodated in the cabinet 21, the diverging jacket 24 of which forms a wall 24 of the gear wheel drive housing 27 (Figure 3). In a longitudinal plane bounded by the rotor axis 41 are undetachably connected parts of the diverting jacket 24, parts of the gear wheel drive housing 27 and parts of the rotor bearing housing 27 and are associated with one and the same monolith 43. The cabinet 21, the rotor bearing housing 25 and the gear wheel drive housing 27 constitute an integral unit. This integral unit is divisible in the direction of the rotor axis 41 into two monolithic parts 44 and 45 (Figures 4 and 5). The monolithic parts 44, 45 are fastened to one another by fastening means comprising bolts 46 and nuts 47.

By means of additional gear wheels 125 and auxiliary output shafts 48 auxiliary mechanisms, for example, a turning motor 49 and a lubricating oil pump 50 are coupled with the rotor shaft 18 by means of the gear wheel drive 19. A frame 15 for the auxilary mechanisms 49 and 50 is detachably fastened to the wall 22 of the cabinet 21 of the rotor nacelle part 8. The lubricating oil pump 50 supplied through oil ducts 52 the lubricating oil 57 to the bearings 53 to 56 the oil being collected below in the cabinet 21. The outer face 36 of the diverging jacket 24 is provided with cooling vanes 58 for cooling the lubricating oil 57 contained in the cabinet 21.

The cooling vanes 58 provided on the outer face 36 of the diverging jacket 24 serve in addition as stiffening vanes. The nacelle 6 is self-supporting and derives the required rigidity from its shape.

The blade setting mechanism 20 for adjusting rotor blades 61 of the mill rotor 26, which is rotatably journalled by means of its rotor shaft 18 on the rotor nacelle part 8 of the nacelle 6 of the windmill 1 is passed through the hollow rotor shaft. The blade setting mechanism 20 comprises a rotation motor for example, an electric motor 63 fed from a source of energy 62 and setting means comprising a spindle shaft 64 coupling the electric motor 63 with the rotor blades 61.

The spindle shaft 64 is journalled by means of a bearing 112 in the hollow rotor shaft and is rigidly connected at one end with the output shaft of a reducing gear box on the electric motor 63. At the other end the spindle shaft is in engagement by means of a worm 71 with a gland 68, which is displaceable in an axial direction in the hollow rotor shaft 18 and guarded against rotation and which is furthermore connected through a rod system 69 with the consoles 78 on the collar 59 of the rotor blades 61 rotatably journalled in the rotor hub 121. Between the spindle shaft 64 and the rotor shaft 18 is arranged an electro-magnetic coupling 65 and on the shaft 67 of the driving motor 63 an electro-magnetic brake 66.

Setting of the rotor blades 16 occurs when the spindle shaft 64 has a speed of rotation differing from that of the rotor shaft in a manner such that, when the spindle shaft 64 rotates in the same direction more rapidly than the rotor shaft 18, the rotor blades 61 are adjusted from the vane position and, when the spindle shaft 64 rotates more slowly, adjustment takes place towards the vane position. When during the operation of the windmill 1 no blade setting is needed, the spindle shaft 64 is fixedly coupled with the rotor shaft 18 by means of the electro-magnetic coupling 65, whilst the electro-magnetic brake 66 is not operative and the electric motor 63 is not energized.

If during operation the rotor blades 61 have to be adjusted, the electro-magnetic coupling 65 as well as the electro-magnetic brake 66 are inoperative and the electric motor 63 is energized in order to attain the number of revolutions required for the adjustment.

The electric motor 63 can be driven with at least two speeds, a high speed so that the spindle shaft 64 assumed a rotary speed equal to that of the rotor shaft 18 at the maximum permissible operative rotor speed and a low speed so that the spindle shaft 64 assumed a rotary speed equal to or lower than that of the rotor shaft 18 at the minimum operative rotor speed. Therefore, for causing a windmill 11 to attain the operative speed out of the rest position, in which the rotor blades 61 are in the vane position, the electric motor 63 has to be driven first with a low speed and subsequently with a high speed in order to attain an operative rotor speed lying between minimum and maximum. In order to reduce the maximum operative speed to the minimum operative speed the electric motor 63 has to be driven with the low speed. If the windmill 1 after having reached the minimum operative speed has to be set in the rest position, the manipulations described hereinafter are carried out for putting the windmill out of operation in an emergency case.

When due to a state of emergency the windmill 1 has to be put out of operation as soon as possible, this is performed with the blade setting mechanism 29 in accordance with the invention in the safest manner as follows:

The electro-magnetic coupling 65 is disengaged by obviating the electric power and the electro-magnetic brake 66 is caused to operate also by obviating the electric energization, whilst the electric energization of the electric motor 63 is also switched off. As result the spindle shaft rotation is slowed down with respect to the rotor shaft rotation and the rotor blades 61 are adjusted towards the vane position so that the mill rotor 26 is aerodynamically braked, whilst for this adjustment no internal source of energy is required.

In the hollow rotor shaft 18 the spindle shaft 64 is coupled by means of a worm 71 with the gland 68, which is slidably journalled in the hollow rotor shaft 18 by means of guide rods 72 and is guarded against rotation with respect to the rotor shaft 18. The rotor shaft 18 is provided with an annular bumper 73, which is fastened by means of bolts 74 to the rotor shaft 18 and on which the guide rods are arranged. By means of ball-and-socket joints 75 the gland 68 is coupled with the rod system 69. The rod system 69 comprises rods 76, which are connected to the one hand by means of ball-and-socket joints with the gland 68 and on the other hand by means of ball-and-socket joints 77 with consoles 78 (Figure 6). The console 78 is fastened to a collar 59 of the rotor blade 61, which is rotatably journalled by means of a rotary crown 60 at the free end 42 of the rotor shaft 18.

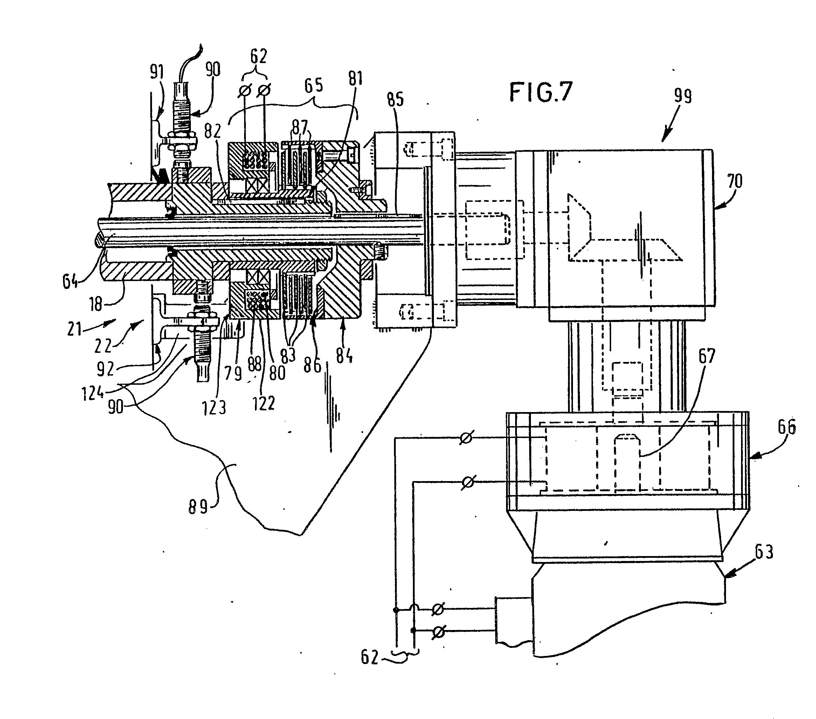

The electro-magnetic multiple disc clutch 65 comprises an annular electro-magnet 79 accommodated in an energization housing 122 and journalled by means of bearings 80 around a star wedge sleeve 81 (Figure 7). The energization housing 122 is guarded against rotation with respect to the wall 22 of the rotor cabin part 8 and for this purpose the energization housing 122 has at least one recess 123 for a lug 124 fastened to the wall 22. The star wedge sleeve 81 is arranged around the rotor shaft 18 and guarded against rotation with respect to the rotor shaft 18 by means of a key. On the star wedge sleeve 81 are arranged axially slidable lamellae 83 guarded against rotation relative to the star wedge sleeve 81 and extending in a radial direction. The lamellae 83 are surrounded by a star wedge housing 84, which is arranged on the spindle shaft 64 and guarded against rotation relative to the spindle shaft by means of a key 85. On the inner face 86 of the star wedge housing 84 are arranged axially slidable lamellae 87 guarded against rotation relative to the star wedge housing 84 and extending in spaces between the lamellae 83 and the star wedge housing 84. When the electro-magnet 79 is energized, a magnetic field is induced in the coil 88 so that the lamellae 87 of the star wedge housing 84 and the lamellae 83 of the star wedge sleeve 81 shift in an axial direction up to a stationary inner face 86 of the star wedge housing 84 so that the lamellae 87 and 84 engage one another as a result of which the spindle shaft 64 is coupled with the rotor shaft 18.

The electric motor 63 and the electro-magnetic brake 66 acting on the shaft 67 of the electric motor 63 are fastened to a frame 89 by means of the reduction gearing housing 99 of the reduction gearing 70. The frame 89 is releasably connected with the built-on wall 22 of the cabinet 21 of the rotor cabin part 8.

A control-system for actuating the blade setting mechanism 20 includes feelers 90 assessing the rotary speed of the rotor shaft 18 and being connected by fastening means 91, 92 with the wall 22 of the cabinet 21 of the rotor nacelle part 8. The control-signals required for the blade setting mechanism originate from the control-system which will not be discussed herein.

In dependence on the signals from the control-system the blades 61 are adjusted by means of the blade setting mechanism 20 towards and, respectively, away from the vane position.

When the electric power is lacking due to disturbance, the electro-magnetic clutch 65 is released so that the spindle shaft 64 is disconnected from the rotor shaft 18, whilst the electro-magnetic brake 66 on the electric motor shaft 67 of the electric motor 63 is actuated so that the rotation or the spindle shaft 64, which is coupled by means of the reduction gearing 70 with the electric motor shaft 67, is slowed down relatively to the rotor shaft 18 and the rotor blades 61 are adjusted towards the vane position without using the electric motor 63 and the mill rotor 26 comes to a standstill.

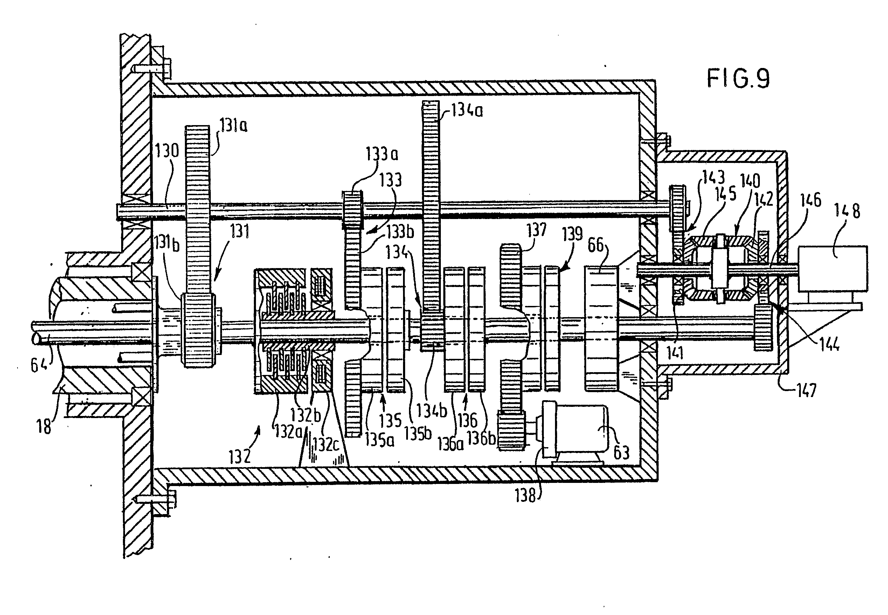

The variant of the blade setting mechanism 20 shown in Figure 8 is identical to the blade setting mechanism 20 of Figure 3, the difference being that the spindle shaft 64 is coupled through a bevel gearing 93 with the rotor blades 61.

The rotor nacelle part 8, with which the cabinet 21, the rotor bearing housing 25 and the gear wheel drive housing 27 constitute an integral unit, can be removed together with the mechanisms 18, 19, 20 surrounded by the rotor nacelle part 8 as a unit from the stationary nacelle part 7 of the nacelle 6. In the case of a windmill park the rotor nacelle part 8 to be removed for maintenance or repair purposes can be replaced by a spare rotor nacelle part 8, after which the maintenance and repair operations can be carried in a revision shop.

To the generator 28 applies the same as to the rotor nacelle part 8.

Figure 9 shows a blade setting mechanism according to the invention by which during the operation of the windmill in addition the blade setting angles can be varied for taking up the prescribed working position associated with a change of wind speed without such setting requiring an internal source of energy.

Figure 9 shows quite schematically the drive of the spindle shaft 64 of the blade setting mechanism 20, in which the auxiliary shaft 130 is driven by the rotor shaft 18 by means of a pair of gear wheels 131 in a manner such that the auxiliary shaft 130 rotates with lower speed than the rotor shaft 18. The gear wheel 131a is rigidly secured to the auxiliary shaft 130. The gear wheel 131b is rigidly secured to the part 132a of an electro-magnetic laminated clutch 132 and the spindle shaft 64 is fixedly connected with the other part 132b of the clutch 132. The housing 132c of the energizing coil is standing still. In this way the auxiliary shaft 130 and the spindle shaft 64 are interconnected by means of the pairs of gear wheels 133, 134 and the clutches 135, 136. The driving means 133 to 136 for driving the spindle shaft 64 by the auxiliary shaft 130 are formed by two actuable clutches 135, 136, each of which is connected on the one hand by one clutch part 135b, 136b with the spindle shaft 64 and each of which is driven on the other hand through a coupling gear wheel 133b, 134b fastened to the other clutch part 135a, 136b with auxiliary shaft 130 gear wheels 133a, 134a, whilst the coupling gear wheels 133b, 134b of the two clutch parts 135a, 136a are larger and, respectively, smaller than the corresponding auxiliary shaft gear wheels 133a, 134a. With the aid of a pair of gear wheels 137 and the clutch 139 the spindle shaft 64 can be brought into connection with the rotation motor 63, which may be provided with a reduction transmission box 138. The spindle shaft 64 is furthermore provided with a spring-energized, electro-magnetic brake 66.

6

# 0 094 106

The mode of operation of the drive of the spindle shaft 64 with the aid of the auxiliary shaft 130 is as follows: At the energization of the clutches 132, 135, 136 the spindle shaft 64 is driven by the rotor shaft 18 itself or, respectively, one of the pairs of gear wheels 133, 134. When the clutch 139 is energized, the spindle shaft 64 is driven by the rotation motor 63 through the pair of gear wheels 137. When only the brake 66 is energized, setting to the vane position occurs in emergency cases.

The transmission ratio of the pair of gear wheels 131 in conjunction with the pair of gear wheels 133 and the pair of gear wheels 134 respectively is such that upon energization of the respective clutches 135 and 136 the spindle shaft 64 rotates with lower and, respectively higher speed than the rotor shaft 18, that is to say, in both cases in the same ratio.

At a slower rotation the rotor blades are set towards the vane position and in the case of faster rotation away from the vane position. The energization combinations for the clutches 132, 135, 136, 139 and the brake 66 are stated in the following Table II.

TABLE II

| | | Energization of: | | | | | | | | | |
|---|---|---|---|---|---|---|---|---|---|---|---|
| | | 132 | | 135 | | 136 | | 139 | | 66 | |
| | | in | out | in | out | in | out | in | out | in | out |
| ROTATING ROTOR | Blade angle constant | x | | | x | | x | | x | x | |
| | Change blade angle towards vane position | | x | x | | | | | x | x | |
| | Change blade angle away from vane position | | x | | x | x | | | x | x | |
| ROTOR STANDING STILL | Blade angle constant | x | | | x | | x | | x | x | |
| | Change blade angle towards vane position ·Direction of rotation motor A | | x | | x | | x | x | | | x |
| | Change blade angle away · from vane position Direction of rotation motor B | | x | | x | | x | x | | | x |
| AERODYNAMIC "EMERGENCY" BRAKING | Rotor blades with maximum speed towards vane position | | x | | x | | x | | x | | x |

The differential mechanism 140 comprises two differential gear wheels 141 and 142. The gear wheel 141 is driven via a gear wheel transmission 143 by the auxiliary shaft 130 and the gear wheel 142 is driven through a gear wheel transmission 144 by the spindle shaft 64. The transmission ratios of the gear wheel transmission 143 and 144 are chosen so that the transmission ratios on the one hand between the spindle shaft 64 and the differential gear wheels 142 and on the other hand between the rotor shaft 18 and the differential gear wheel 142 are the same, whilst the gear wheels 141 and 142 are driven in opposite senses. When the gear wheels 141 and 142 have the same speeds of rotation but in opposite senses, the differential element 145 will not rotate. However, when the rotary speeds of the gear wheels 141 and 142 are different, for example, in the event of blade angle setting, the element 145 will turn about the shaft 146 and occupy a different position. The position of this element 145 relative to the housing 147 is proportional to the blade setting angle and may be assessed with the aid of a sensor 148.

## Claims

1. A blade setting mechanism (20) for setting rotor blades (61) of a windmill (1) provided with a hollow rotor shaft (18) journalled in a rotor nacelle (8), said mechanism (20) comprising a spindle shaft (64) coaxially arranged in the hollow rotor shaft (18), which spindle shaft (64) on the one hand is coupled with setting means (68, 69) capable of producing a blade setting torque as result of a rotation of the rotor shaft

7

(18) relative to the spindle shaft (64), and on the other hand is coupled with an energizable clutch (65) which on activation couples the spindle shaft (64) with the rotor shaft (18), and when no longer activated, decouples the spindle shaft (64) from the rotor shaft (18), whereupon the setting means (68, 69) displace the rotor blades (61) to the vane position, and a motor (63) which by means of a clutch (65, 139) can drivingly be coupled with said spindle shaft (64), characterized in that the blade setting mechanism (20) additionally comprises an auxiliary shaft (130) driven by the rotor shaft (18), as well as driving means (135, 136) for driving the spindle shaft (64) by the auxiliary shaft (130) optionally with lower or higher speed than that of the rotor shaft (18).

2. A blade setting mechanism (20) as claimed in claim 1, characterized in that an electro-magnetic brake (66), when no longer energized, decelerates the speed of rotation of the spindle shaft (64).

3. A blade setting mechanism (20) as claimed in claim 1 or 2, characterized in that the auxiliary shaft (130) is driven by the rotor shaft (18) with the aid of a pair of gear wheels (131) in a manner such that the auxiliary shaft (130) rotates, with a fixed ratio, with lower speed than the rotor shaft (18).

4. A blade setting mechanism (20) as claimed in anyone of the preceding claims, characterized in that the driving means (133, 134, 135, 136) are formed by two actuable clutches (135, 136), each of which is connected on the one hand by one clutch part (135b, 136b) with the spindle shaft (64) and each of which is driven on the other hand through a coupling gear wheel (133b, 134b) fastened to the other clutch part (135a, 136a) by gear wheels (133a, 134a) on the auxiliary shaft (130), whilst the coupling gear wheels (133b, 134b) of the two clutch parts (135a, 136a) are larger and smaller respectively than the corresponding auxiliary shaft gear wheels (133a, 134a).

5. A blade setting mechanism (20) as claimed in claim 4, characterized in that the clutches (135, 136) are electro-magnetically energizable clutches, each having two clutch parts (135a, 135b; 136a, 136b) which are interconnected when the associated clutch (135, 136 resp.) is energized.

6. A blade setting mechanism (20) as claimed in claim 4 or 5, characterized in that the spindle shaft (64) and the auxiliary shaft (130) drive a differential mechanism (140) to assess the blade setting angle.

7. A blade setting mechanism (20) as claimed in claim 6, characterized in that the differential gear wheels (141, 142) of the differential mechanism (140) driven by the spindle shaft (64) and the auxiliary shaft (130) rotate in opposite senses, in that the speeds of rotation of the two differential gear wheels (141, 142) are, to the same extent, proportional to the speeds of rotation of the rotor shaft (18) and the spindle shaft (64) respectively, and in that a turn of a differential element (145) co-operating with the two differential gear wheels (141, 142) can be assessed with the aid of a sensor.

**Patentansprüche**

1. Flügelstellvorrichtung (20) zur Einstellung von Rotorflügeln (61) eines Windrades (1) mit einer in einem Rotorgehäuse (8) gelagerten hohlen Rotorwelle (18), wobei die Vorrichtung (20) eine Spindelwelle (64) aufweist, die koaxial in der hohlen Rotorwelle (18) angeordnet ist und wobei die Spindelwelle (64) auf der einen Seite mit Stellvorrichtungen (68, 69) gekoppelt ist, die ein Flügelstelldrehmoment aufgrund der Drehung der Rotorwelle (18) relativ zu der Spindelwelle (64) erzeugen können, und auf der anderen Seite mit einer schaltbaren Kupplung (65) gekoppelt ist, die bei Betätigung die Spindelwelle (64) mit der Rotorwelle (18) kuppelt, und wenn sie nicht mehr betätigt wird, die Spindelwelle (64) von der Rotorwelle (18) entkoppelt, wodurch die Stellvorrichtungen (68, 69) die Rotorflügel (61) in die Flügelposition verschieben, und einen Motor (63) mit der mittels einer Kupplung (65, 139) antreibend an die Spindelwelle (64) gekuppelt werden kann, dadurch gekennzeichnet, daß die Flügelstellvorrichtung (20) zusätzlich eine durch die Rotorwelle (18) angetriebene Hilfswelle (130) aufweist, sowie Antriebsvorrichtungen (135, 136) zum wahlweisen Antrieb der Spindelwelle (64) durch die Hilfswelle (130) mit geringerer oder höherer Geschwindigkeit als die der Rotorwelle (18).

2. Flügelstellvorrichtung (20) nach Anspruch 1, dadurch gekennzeichnet, daß eine elektromagnetische Bremse (66) im nicht eingeschalteten Zustand die Rotationsgeschwindigkeit der Spindelwelle (64) vermindert.

3. Flügelstellvorrichtung (20) nach Anspruch 1 oder 2, dadurch gekennzeichnet, daß die Hilfswelle (130) durch die Rotorwelle (18) über ein Getrieberäderpaar (131) so angetrieben wird, daß sich die Hilfswelle (130) in einem festen Verhältnis mit geringerer Geschwindigkeit dreht als die Rotorwelle (18).

4. Flügelstellvorrichtung (20) nach einem der vorangehenden Ansprüche, dadurch gekennzeichnet, daß die Antriebsvorrichtungen (133, 134, 135, 136) aus zwei schaltbaren Kupplungen (135, 136) gebildet werden, von denen jede auf der einen Seite durch ein Kupplungsteil (135b, 136b) mit der Spindelwelle (64) verbunden ist und jede auf der anderen Seite über ein an dem anderen Kupplungsteil (135a, 136a) befestigtes Kopplungsgetrieberad (133b, 134b) durch Getrieberäder (133a, 134a) auf der Hilfswelle (130) angetrieben wird, wobei die Kopplungsgetrieberäder (133b, 134b) der zwei Kupplungsteile (135a, 136a) größer bzw. kleiner sind als die entsprechenden Hilfswellengetrieberäder (133a, 134a).

5. Flügelstellvorrichtung (20) nach Anspruch 4, dadurch gekennzeichnet, daß die Kupplungen (135, 136) elektromagnetisch zu betätigende Kupplungen sind, wobei jede zwei Kupplungsteile (135a, 135b; 136a, 136b) aufweist, die miteinander verbunden sind, wenn die zugeordnete Kupplung (135 bzw. 136) betätigt wird.

6. Flügelstellvorrichtung (20) nach Anspruch 4 oder 5, dadurch gekennzeichnet, daß die Spindelwelle

8

(64) und die Hilfswelle (130) ein Differentialgetriebe (140) antreiben, zur Bestimmung des Flügelstellwinkels.

7. Flügelstellvorrichtung (20) nach Anspruch 6, dadurch gekennzeichnet, daß die Differentialgetrieberäder (141, 142) des durch die Spindelwelle (64) und die Hilfswelle (130) angetriebenen Differentialgetriebes (140) in entgegengesetzte Richtungen rotieren, daß die Rotationsgeschwindigkeiten der beiden Differentialgetrieberäder (141, 142) in gleicher Weise proportional sind zur Rotationsgeschwindigkeit der Motorwelle (18) bzw. der Spindelwelle (64) und daß eine Drehung eines mit den beiden Differentialgetrieberädern (141, 142) zusammenwirkenden Differentialelementes (145) mit Hilfe eines Sensors abgetastet werden kann.

## Revendications

1. Mécanisme de calage de pales (20) permettant de caler les pales de rotor (61) d'une éolienne (1) munie d'un arbre de rotor creux (18) tourillonné dans une nacelle de rotor (8), ledit mécanisme (20) comprenant un arbre de commande (64) monté de manière coaxiale dans l'arbre de rotor creux (18), cet arbre de commande (64) étant, d'une part, accouplé à des moyens de calage (68, 69) susceptibles de produire un couple de calage de pales sous l'effet d'une rotation de l'arbre de rotor (18) par rapport à l'arbre de commande (64), et étant d'autre part, accouplé à un embrayage pouvant être mis sous tension (65) qui, lorsqu'il est actionné, accouple l'arbre de commande (64) à l'arbre de rotor (18), et qui, lorsqu'il n'est plus actionné, désac-couple cet arbre de commande (64) de cet arbre de rotor (18), grâce à quoi les moyens de calage (68, 69) déplacent les pales de rotor (61) vers la position en drapeau, et un moteur (63) qui peut, à l'aide d'un embrayage (65, 139), être accouplé, avec possibilité d'entraînement, audit arbre de commande (64), caractérisé en ce que le mécanisme de calage de pales (20) comprend en outre un arbre auxiliaire (130) entraîné par l'arbre de rotor (18), ainsi que des moyens d'entraînement (135, 136) permettant d'entraîner l'arbre de commande (64) à l'aide de cet arbre auxiliaire (130) facultativement avec une vitesse plus faible ou plus élevée que celle de l'arbre de rotor (18).

2. Mécanisme de calage de pales (20) tel que revendiqué dans la revendication 1, caractérisé en ce qu'un frein électro-magnétique (66), lorsqu'il n'est plus mis sous tension, freine la vitesse de rotation de l'arbre de commande (64).

3. Mécanisme de calage de pales (20) tel que revendiqué dans la revendication 1 ou 2, caractérisé en ce que l'arbre auxiliaire (130) est entraîné par l'arbre de rotor (18) à l'aide d'une paire de roues d'engrenages (131), d'une manière telle que l'arbre auxiliaire (130) tourne, avec un rapport fixe, à une vitesse plus faible que l'arbre de rotor (18).

4. Mécanisme de calage de pales (20) tel que revendiqué dans l'une quelconque des revendications précédentes, caractérisé en ce que les moyens d'entraînement (133, 134, 135, 136) sont formés de deux embrayages manoeuvrables (135, 136) dont chacun est relié d'une part à l'arbre de commande (64) par une partie d'embrayage (135b, 136b) et dont chacun est entraîné, d'autre part, par des roues d'engrenages (133a, 134a) situées sur l'arbre auxiliaire (130) par l'intermédiaire d'une roue d'engrenage d'accouplement (133b, 134b) fixée sur l'autre partie d'embrayage (135a, 136a), tandis que les roues d'engrenage d'accouplement (133b, 134b) des deux parties d'embrayage (135a, 136a) sont respectivement plus grande et plus petite que les roues d'engrenages correspondantes (133a, 134a) de l'arbre auxiliaire.

5. Mécanisme de calage de pales (20) tel que revendiqué dans la revendication 4, caractérisé en ce que les embrayages (135, 136) sont des embrayages pouvant être mis sous tension par voie électromagnétique, chacun présentant deux parties d'embrayage (135a, 135b; 136a, 136b) qui sont mutuellement reliées lorsque l'embrayage associé respectivement (135) et (136) est mis sous tension.

6. Mécanisme de calage de pales (20) tel que revendiqué dans la revendication 4 ou 5, caractérisé en ce que l'arbre de commande (64) et l'arbre auxiliaire (130) entraînent un mécanisme différentiel (140) pour fixer l'angle de calage des pales.

7. Mécanisme de calage de pales (20) tel que revendiqué dans la revendication 6, caractérisé en ce que les roues d'engrenage différentiel (141, 142) du mécanisme différentiel (140) entraînées par l'arbre de commande (64) et l'arbre auxiliaire (130) tournent dans des sens opposés, en ce que les vitesses de rotation des deux roues d'engrenage différentiel (141, 142) sont, dans la même mesure, proportionnelles aux vitesses de rotation respectivement de l'arbre de rotor (18) et de l'arbre de commande (64), et en ce que l'on peut relever à l'aide d'un capteur un tour d'un élément différentiel (145) coopérant avec les deux roues d'engrenage différentiel (141, 142).

9

FIG.1

FIG. 2

FIG. 3

FIG.4

FIG.5

FIG.8

FIG.6

4

FIG.7

FIG.9